# EUROPEAN PATENT SPECIFICATION

(11) **EP 2 276 705 B1**
(45) Date of publication and mention of the grant of the patent: **31.05.2017**
(21) Application number: 09728037.4
(22) Date of filing: 31.03.2009
(51) Int. Cl.: B01D 61/14, C02F 1/00, C02F 1/72, C02F 1/76, C02F 1/78, C02F 103/02, C02F 1/50

(54) **ENVIRONMENTALLY FRIENDLY HYBRID MICROBIOLOGICAL CONTROL TECHNOLOGIES FOR COOLING TOWERS**
UMWELTFREUNDLICHE HYBRIDTECHNIKEN ZUR MIKROBENBEKÄMPFUNG FÜR KÜHLTÜRME
TECHNOLOGIES DE LUTTE MICROBIOLOGIQUE HYBRIDE ÉCOLOGIQUE POUR DES TOURS DE REFROIDISSEMENT

(30) Priority: 01.04.2008 US 60296
(43) Date of publication of application: 26.01.2011
(73) Proprietor: Nalco Company, Naperville, IL 60563-1198 (US)
(72) Inventor: URMENYI, Ana-mariana, NL-3584 GL Utrecht (NL); KOPPES, Jeroen, A., NL-2311 CP Leiden (NL); WETEGROVE, Robert, L., Winfield IL 60190 (US); VAN HAASTERECHT, Menno, J.t, 2352 CW Heiderdorp (NL)
(74) Representative: HGF Limited
(86) International application number: PCT/US2009/038860
(87) International publication number: WO 2009/123995

(56) References cited:
- WO-A-2008/101089
- WO-A-2009/020694
- US-A- 4 177 143
- US-A- 5 403 479
- US-A1- 2003 127 391

## Description

### TECHNICAL FIELD

This invention relates to environmentally friendly hybrid microbiological control compromising a physical method through fine filtration which removes nutrients, bacteria and suspended solids from re-circulating cooling systems and hence is reducing significantly the biocide consumption and chemical microbiological treatment programs previously required to obtain similar levels of effectiveness.

### BACKGROUND

Particle separation can be performed based on size exclusion. Large size particles are easily removed by sand filtration. However, only filters with small pore size, such as membranes or certain granular media, can separate colloidal particles, bacteria, macromolecules, small molecules, or even ions. Membrane is a physical barrier (thin layer) capable of separating materials as a function of their physical and chemical properties in the presence of an applied driving force. Granular media are formed from small particles and have a small effective pore size.

### Definitions:

**Biocides:** are active substances, and preparations containing one or more active substances, put up in the form in which they are supplied to the user, intended to destroy, deter, render harmless, prevent the action of, or otherwise exert a controlling effect on any harmful organism by physical, chemical or biological means.

**Oxidising Biocides:** Oxidising biocides are generally non-selective, they can oxidise all organic material including micro-organisms. They oxidise the cell components of organisms, the thinner the cell wall the more vulnerable in organisms is towards oxidising biocides. Because oxidising biocides are non-selective, resistance does not develop. Examples of oxidizing biocides include halogens, active oxygen sources.

**Non-Oxidising Biocides:** Unlike oxidising biocides, non-oxidising biocides are selective in their mechanism of attacking micro-organisms. They interfere with the metabolism of the organism, disrupt the cell wall, or prevent multiplication. To be effective, typically higher concentrations are required than for oxidising biocides. Micro-organisms can develop resistance/tolerance when the biocide is longer in use, therefore it is good practice to alternate non-oxidising biocides.

**Biodispersants and biodetergents** Are surface-active chemical, that exhibit generally no biocidal characteristics on their own, prevent micro-organisms from attaching to surfaces and accelerate detachment of a biofilm by loosening the slime matrix.

**Fine Filter** is a physical barrier capable of separating materials by their physical and chemical properties. A fine filter is capable of separating particles from fluids in part or all of the range of a few mm to 0.1 nm particle size.

**Membrane** is a physical barrier capable of separating materials as a function of their physical and chemical properties when a driving force is applied across the membrane.

**Granular media:** comprise particles arranged in a container so as to from a physical barrier capable of separating materials by their physical and chemical properties when the materials are forced to move through the granular barrier. The granular medium may be one size or a mixture of sizes. The granules maybe silica, anthracite, activated carbon, or other inorganic or organic material.

Depending on the pore size one can distinguish the following membrane techniques: microfiltration (MF), ultrafiltration (UF), nanofiltration (NF) and reverse osmosis (RO).

Ultrafiltration (pore size 0.01-0.1 µm) is used to retain particles of a size of a few nanometres whereas microfiltration, which employs porous membranes with pore diameters between 0.05-10 µm is able to separate particles in the µm size range.

Ultra- and Micro-filtration are pressure-driven barriers to suspended solids and bacteria to produce water with high purity. Suspended solids and solutes of high molecular weight are retained, while water and low molecular weight solutes pass through the membrane. The water and other dissolved components that pass through the membrane are known as the permeate. The components that do not pass through are known as the concentrate. Depending on the Molecular Weight Cut Off (MWCO) of the membrane used, macromolecules maybe purified, separated, or concentrated in either fraction.

Because only high-molecular weight species are removed, the pressure differential across the membrane surface is relatively low. Low applied pressures are therefore sufficient to achieve high flux rates from an UF/MF membrane. Flux of a membrane is defined as the amount of permeates produced per unit area of membrane surface per unit time. Generally flux is expressed as liter per square meter per hour (LMH). UF and MF membranes can have extremely high fluxes but in most practical applications the flux varies between 10 and 100 LMH at an operating pressure of about 0.1 bar to 4 bar.

UF/MF membrane modules come in plate-and-frame, spiral-wound, and tubular configurations. The configuration selected depends on the type and concentration of colloidal material. For more concentrated solutions, more open configurations like plate-and-frame and tubular are used. In all configurations the optimum system design must take into consideration the flow velocity, pressure drop, power consumption, membrane fouling and module cost.

A variety of materials have been used for commercial polymeric UF/MF membranes like polysulfone (PS), polyacrylonitrile (PAN), polyerthersulfone (PES), cellulose acetate (CA) and polyvinylidene fluoride (PVDF). Also inorganic membranes are used like ceramic membranes.

Ultrafiltration is the membrane separation method with the broadest application spectrum. It is increasingly used in drinking water treatment, removing major pathogens and contaminants such as Giardia lamblia, Cryptosporium oocyts and large bacteria. However, soluble components such as salts and low molecular organic substances usually cannot be retained with ultrafiltration membranes.

There are several factors that can affect the performance of an UF/MF system.
1. Flow Across the Membrane Surface. The permeate rate increases with the flow velocity of the liquid across the membrane surface. Flow velocity is especially critical for liquids containing suspensions. Higher flow also means higher energy consumption and larger pumps. Increasing the flow velocity also reduces the fouling of the membrane surface. Generally, an optimum flow velocity is arrived at by a compromise between the pump horsepower and increase in permeate rate.
2. Operating Pressure. Permeate rate is directly proportional to the applied pressure across the membrane surface. Most membrane modules have an operating pressures limit due to the physical strength limitation imposed to the membrane module.
3. Operating Temperature. Permeate rates increase with increasing temperature due to reduced liquid viscosity. It is important to know the effect of temperature on membrane flux in order to distinguish between a drop in permeate due to a drop in temperature and the effect of other parameters.

US Patent Publication No. 2003/0127391 discloses a method for the treatment of circulating cooling water to remove undesirable chemical, particulate and biological components to minimise fouling, scaling and corrosion. A saturated solution of calcium carbonate is maintained in a cross flow filtration system by controlling the concentration of precipitated salts, temperature and/or pH. The cross flow filter may be a microfilter or a nanofilter.

US Patent No. 4,177,143 discloses a method of improving the operation of filters of the type used to filter cooling water which is used intermittently in direct heat exchange relationship to cool large office buildings and similar structures, which method comprises maintaining the filters when not in use in contact with an aqueous solution which contains a preservative amount of an industrial biocide. Also shown is a method of controlling microorganisms in the filters by using a biocide with the backwash water.

US Patent No. 5, 403, 479 discloses a method and cleaning system for cleaning the outer surface of a fouled microfiltration or ultrafiltration semipermeable hollow fiber membrane after its initial stable transmembrane flux has been decreased to an unacceptably low level. The membrane is cleaned by flowing a cleaning fluid, preferably a biocidal oxidative electrolyte having an oxidising anion and an associated cation through the clean, permeate-side of the membrane, at low pressure no more than the bubble pressure breakthrough for a microfiltration or ultrafiltration fiber.

Micro and ultrafiltration process takes place at low differential pressure making it a low energy consuming process and MF/UF is removing nutrients and bacteria from the water; the cooling system biofouling potential is retarded hence reducing biocide consumption.

### SUMMARY

The invention discloses a method for the microbiological control of cooling systems in accordance with claims 1 to 8 attached hereto.

In one aspect, the invention provides a method for microbiological control in cooling systems comprising:
adding a biocide to a recirculating fluid containing nutrients, bacteria and suspended solids;
diverting the recirculating fluid to a side stream; and
passing the recirculating fluid through an ultrafiltration system containing a tank for the recirculating fluid and concentrate and membranes that have a pore size at 5 or less µm to provide a permeate,
wherein the ultrafiltration system is back flushed to regenerate the membranes when the permeate flow drops below 15% from the initial permeate flow.

The current invention describes the following key aspects:
1. It is an advantage of the invention to provide low differential pressure.
2. It is an advantage of the invention to provide removal of fine silt, turbidity, particulate TOC, nutrients reducing biological growth.
3. It is an advantage of the invention to provide high bacteria removal efficiency.
4. Provides a method for regeneration by back flushed to remove the fouling layer.

### DETAILED DESCRIPTION

The current invention describes a method for microbiological control in cooling systems wherein a biocide is added to a recirculating fluid containing nutrients, bacteria and suspended solids and is passed through a fine filtration system wherein the recirculating fluid may be diverted to a side stream then passed through the fine filtration system.

The fine filtration system contains membranes that have a pore size at 5 or less µm, preferably having a pore size from 0.01 to 0.5 µm. The fine filtration system is an ultrafiltration system containing membranes that are ultra-filtration membranes. These membranes are regenerated by back flushing the system when the permeate flow drops below 15% from the initial permeate flow.

The claimed invention uses an oxidising biocide that is preferably one or more of the following: chlorine, hypochlorite, ClO₂, bromine, ozone, hydrogen peroxide, peracetic acid and peroxysulphate. Additionally the invention may use a non-oxidising biocide that is preferably one or more of the following: glutaraldehyde, dibromo-nitrilopropionamide, isothiazolone, quaternary ammonium, terbutylazine, polymeric biguanide, methylene bisthiocyanate and tetrakis hydroxymethyl phosphonium sulphate. The claimed invention may also use a mixture of an oxidising biocide and a non-oxidising biocide with the preferred examples listed above.

### EXAMPLES

The foregoing may be better understood by reference to the following examples, which are intended to illustrate methods for carrying out the invention and are not intended to limit the scope of the invention.

It should be understood that various changes and modifications to the presently preferred embodiments described herein will be apparent to those skilled in the art. It is therefore intended that such changes and modifications be covered by the appended claims.

Microbiological control, biocide usage, were followed in a pilot cooling tower (PCT) in the presence and absence of a physical method membrane filtration (ultrafiltration) that, due to size exclusion, is removing particulate matter including bacteria, with a size larger than 0.01 µm.

### Ultrafiltration device:

An ultrafiltration device was rented from Norit BV. The unit is composed from a tank (volume 25 I) where the water is concentrated. A level controller controls the level of the water in the tank. From the tank the water is pumped with the help of pump PO1 over the membrane. The concentrate is passed through a cooling system and then is returned to the storage tank. The permeate is added to the basin of the cooling tower.

To prevent membrane fouling a minimal flow velocity of 2 m/sec was run over the membranes. Opening or closing of valves V1 and V2 adjusted the flow. Valves V1 and V2 were never closed completely. In addition, according to the supplier specifications, the feed pressure flow in PO1 was not exceeding 1 bar (blow up of membranes). The membranes should never become dry after the first use (always keep them wet).

The cross-flow membrane was an 8 mm hollow fiber, inside-out filtration. The pilot unit was initially equipped with 2 membrane modules with a surface are of 0.15 m² each, total membrane surface is 0.3 m².

### UF Membrane cleaning for start-up:

When new membranes were used, first the glycerin that keeps the membrane wet and biocide were rinsed out (to prevent degradable COD to enter the cooling tower as additional food source). The tank was filled with DI water and recirculated over the membranes according suppliers (Norit) recommendations. After 30 minutes the water is drained. The procedure is repeated at least three times. Finally the system is drained, a valve is closed and tank is filled with water from the PCT basin while permeate is re-introduced into the PCT basin.

### Pilot cooling tower (PCT) tests with and without membrane device:

Cooling water hybrid physical/chemical microbiological treatment performance test was run using the Nalco standard PCT equipment with a setup. The volume of the basin was 200 L. For the base line an extra tank of 25 L was added to the basin, to simulate the tank when UF device was used. The tank was heated to 30°C temperatures similar to tank.

The PCT test was run using metal tubes. All tubes were put in service after thorough degreasing, without any pre-passivation. Coupons were also included in the test. The PCT test was started without heating for the first 12 hours to allow initial corrosion reactions to come to rest. After this, heat was applied. The test was started with cycled up water. Cooling water treatment 3DT165 product were dosed based on the Nalco Trasar technology. Blowdown was controlled by 3DTrasar based on conductivity set point when no membrane unit was in use.

When UF unit was running, the blow-down was set manually using a pump and once per day removing the concentrate from the tank. The total volume of the blow- down was equivalent to the blow-down controlled by the 3DT unit.

The PCT was inoculated with cultured bacteria (*Pseudonomas*) to reach microbiological levels of about 10⁵ cfu/mL. The inoculation was done at the beginning of each test. Liquid nutrients (Nutrients broth 4 g/L, supplier Oxio) were added to the system with a speed of 0.01 g/L/day continuously. Microbial control was carried out using hypobromite. The biocide dosage was done based on ORP control.

Make-up water chemistry was checked using ICP. Relevant parameters of the recirculating cooling water were analyzed or verified using field test methods on a daily basis. Following parameters were tested routinely: pH, M-alkalinity, conductivity, calcium and total hardness, ortho phosphate, total phosphate and polymer level.

### PCT-Ultrafiltration

To the PCT basin the UF unit was mounted. Water from the basin was added continuously to the tank of the UF unit. The level of the water in the tank was maintained constant using a level controller. The pump P02 was removing continuously a volume of 1.4 l/h as blow-down and disposing 10 I/day concentrate from tank. The permeate is re-introduced into the basin. The permeate flow was kept at 20-25 l/h. When the permeate flow dropped about 15% from the initial values a cleaning procedure was performed.

### UF unit Cleaning procedure:

UF unit was cleaned during the case study 1 everyday (comparative example). The same procedure is followed also for the case study 2 with the difference that cleaning procedure was applied only when the permeate flow dropped below 15% from the initial permeate flow (according to the method of the invention). First, the feed water is closed while the permeate is inserted to the cooling tower basin. When the concentrate has a volume of about 10 L, the permeate tube is removed from the basin and it is introduced to the tank. The concentrate is removed and disposed to the drain. The tank was filled with DI water, biodetergent and biocide (hypochlorite) and recirculated in agreement with suppliers (Norit) recommendations. The permeate water and recirculated water are kept in the tank. After 30 minutes, the pump is stopped and the water is drained. Clean DI is added to the system and is recirculated over the UF membrane. The procedure is repeated at least three times. Finally the system is drained, the valve is closed and the tank is filled with water from the basin while permeate is re-introduced into the PCT basin.

### COMPARATIVE EXAMPLE 1

**ORP 260 mV**

| Days | Biocide Use g/h | | TVC [cfu/ml] | |
|---|---|---|---|---|
| | without UF] | with UF - | without UF] | with UF - |
| 11 | 0.951 | 1.04 | | |
| 12 | 1.111 | 0.97 | 3.70E+05 | 1.03E+04 |
| 13 | | 0.82 | 4.20E+05 | 1.38E+04 |
| 14 | | 1.15 | 5.00E+05 | 6.00E+03 |
| 15 | 0.642 | 0.95 | | 6.40E+02 |
| 16 | 0.745 | | | |
| 17 | 0.875 | 0.83 | 1.80E+05 | 1.33E+03 |
| 18 | | 0.61 | 2.60E+05 | 4.30E+03 |
| 19 | 0.728 | 0.86 | 3.00E+05 | 3.40E+03 |
| Average | 0.84 | 0.90 | 3.38E+05 | 5.68E+03 |

### EXAMPLE 2

**ORP 200 mV**

| Days | Biocide Use g/h | | TVC [cfu/ml] | |
|---|---|---|---|---|
| | without UF] | with UF - | without UF] | with UF - |
| 11 | 0.433 | | 3.60E+04 | |
| 12 | 0.592 | 0.326 | 3.80E+04 | |
| 13 | | 0.241 | 1.71E+05 | 7.80E+04 |
| 14 | | | 2.30E+05 | 8.50E+04 |
| 15 | 0.633 | | 1.42E+05 | 6.80E+04 |
| 16 | | 0.311 | | 1.49E+05 |
| 17 | | | | 1.46E+05 |
| 18 | 0.556 | 0.339 | 5.10E+04 | |
| 19 | 0.600 | 0.208 | 5.50E+04 | |
| Average | 0.5628 | 0.285 | 1.03E+05 | 1.05E+05 |

## Claims

1. A method for microbiological control in cooling systems comprising:
adding a biocide to a recirculating fluid containing nutrients, bacteria and suspended solids;
diverting the recirculating fluid to a side stream; and
passing the recirculating fluid through an ultrafiltration system containing a tank for the recirculating fluid and concentrate and membranes that have a pore size at 5 or less µm to provide a permeate,
wherein the ultrafiltration system is back flushed to regenerate the membranes when the permeate flow drops below 15% from the initial permeate flow.

2. The method of claim 1 wherein the filtration system contain membranes that have a pore size from 0.01 to 0.10 µm.

3. The method of claim 1 wherein the biocide is an oxidising biocide.

4. The method of claim 3 wherein the oxidising biocide is one or more of the following:
chlorine, hypochlorite, ClO₂, bromine, ozone, hydrogen peroxide, peracetic acid and peroxysulphate.

5. The method of claim 1 wherein the biocide is a non-oxidising biocide.

6. The method of claim 5 wherein the non-oxidising biocide is one or more of the following: glutaraldehyde, dibromo-nitrilopropionamide, isothiazolone, quaternary ammonium, terbutylazine, polymeric biguanide, methylene bisthiocyanate and tetrakis hydroxymethyl phosphonium sulphate.

7. The method of claim 1 wherein the biocide is a mixture of an oxidising biocide and a non-oxidising biocide.

8. The method of claim 7 wherein the biocide is one or more of the following: chlorine, hypochlorite, ClO₂, bromine, ozone, hydrogen peroxide, oxygen based biocides, peracetic acid, peroxysulphate, glutaraldehyde, dibromo-nitrilopropionamide, isothiazolone, quaternary ammonium, terbutylazine, polymeric biguanide, methylene bisthiocyanate and tetrakis hydroxymethyl phosphonium sulphate.

## Patentansprüche

1. Verfahren für die mikrobiologische Kontrolle in Kühlsystemen, das Folgendes beinhaltet:
Hinzufügen eines Biozids zu einer umlaufenden Flüssigkeit, die Nährstoffe, Bakterien und suspendierte Feststoffe enthält;
Ausleiten der umlaufenden Flüssigkeit zu einem Seitenstrom; und
Durchleiten der umlaufenden Flüssigkeit durch ein Ultrafiltrationssystem, das einen Tank für die umlaufende Flüssigkeit enthält, und Konzentrat sowie Membranen, die eine Porengröße von 5 oder weniger µm aufweisen, um ein Permeat bereitzustellen,
wobei das Ultrafiltrationssystem rückgespült wird, um die Membranen zu regenerieren, wenn der Permeatfluss unter 15 % vom anfänglichen Permeatfluss abfällt.

2. Verfahren gemäß Anspruch 1, wobei das Filtrationssystem Membranen enthält, die eine Porengröße von 0,01 bis 0,10 µm aufweisen.

3. Verfahren gemäß Anspruch 1, wobei das Biozid ein oxidierendes Biozid ist.

4. Verfahren gemäß Anspruch 3, wobei das oxidierende Biozid eines oder mehrere der folgenden ist: Chlor, Hypochlorit, ClO₂, Brom, Ozon, Wasserstoffperoxid, Peressigsäure und Peroxysulfat.

5. Verfahren gemäß Anspruch 1, wobei das Biozid ein nicht oxidierendes Biozid ist.

6. Verfahren gemäß Anspruch 5 wobei das nicht oxidierende Biozid eines oder mehrere der folgenden ist: Glutaraldehyd, Dibrom-nitrilopropionamid, Isothiazolon, quaternäres Ammonium, Terbutylazin, polymeres Biguanid, Methylenbisthiocyanat und Tetrakishydroxymethylphosphoniumsulfat.

7. Verfahren gemäß Anspruch 1, wobei das Biozid eine Mischung aus einem oxidierenden Biozid und einem nicht oxidierenden Biozid ist.

8. Verfahren gemäß Anspruch 7 wobei das nicht oxidierende Biozid eines oder mehrere der folgenden ist: Chlor, Hypochlorit, ClO₂, Brom, Ozon, Wasserstoffperoxid, sauerstoffbasierte Biozide, Peressigsäure, Peroxysulfat, Glutaraldehyd, Dibrom-nitrilopropionamid, Isothiazolon, quaternäres Ammonium, Terbutylazin, polymeres Biguanid, Methylenbisthiocyanat und Tetrakishydroxymethylphosphoniumsulfat.

## Revendications

1. Procédé de lutte microbiologique dans des systèmes de refroidissement comprenant :
l'adjonction d'un biocide à un fluide recirculant contenant des nutriments, des bactéries et des solides en suspension ;
la déviation du fluide recirculant vers un flux latéral ; et
le passage du fluide recirculant à travers un système d'ultrafiltration contenant un réservoir pour le fluide recirculant et le concentré et des membranes qui ont une taille de pores inférieure ou égale à 5 µm pour donner un perméat,
ledit système d'ultrafiltration étant lavé à contre-courant pour régénérer les membranes lorsque le flux de perméat tombe en dessous de 15 % du flux de perméat initial.

2. Procédé selon la revendication 1, ledit système de filtration contenant des membranes qui ont une taille de pores allant de 0,01 à 0,10 µm.

3. Procédé selon la revendication 1, ledit biocide étant un biocide oxydant.

4. Procédé selon la revendication 3, ledit biocide oxydant étant l'un ou plusieurs des suivants : le chlore, l'hypochlorite, le ClO₂, le brome, l'ozone, le peroxyde d'hydrogène, l'acide peracétique et le peroxysulfate.

5. Procédé selon la revendication 1, ledit biocide étant un biocide non oxydant.

6. Procédé selon la revendication 5, ledit biocide non oxydant étant l'un ou plusieurs des suivants : le glutaraldéhyde, le dibromonitrilopropionamide, l'isothiazolone, un ammonium quaternaire, la terbutylazine, un biguanide polymère, le méthylène bisthiocyanate et le sulfate de tétrakis(hydroxyméthyl)phosphonium.

7. Procédé selon la revendication 1, ledit biocide étant le mélange d'un biocide oxydant et d'un biocide non oxydant.

8. Procédé selon la revendication 7, ledit biocide étant l'un ou plusieurs des suivants : le chlore, l'hypochlorite, le ClO₂, le brome, l'ozone, le peroxyde d'hydrogène, les biocides à base d'oxygène, l'acide peracétique, le peroxysulfate, le glutaraldéhyde, le dibromonitrilopropionamide, l'isothiazolone, un ammonium quaternaire, la terbutylazine, le biguanide polymère, le méthylène bisthiocyanate et le sulfate de tétrakis(hydroxyméthyl)phosphonium.
